# EUROPÄISCHE PATENTSCHRIFT

(11) **EP 4 117 948 B1**
(45) Veröffentlichungstag und Bekanntmachung des Hinweises auf die Patenterteilung: **10.04.2024**
(21) Anmeldenummer: 21707893.0
(22) Anmeldetag: 18.02.2021
(51) Int. Cl.: B60K 7/00, B66F 9/06, B66F 9/075

(54) **MOBILES TRANSPORTSYSTEM**
MOBILE TRANSPORT SYSTEM
SYSTÈME DE TRANSPORT MOBILE

(30) Priorität: 09.03.2020 DE 102020001491
(43) Veröffentlichungstag der Anmeldung: 18.01.2023
(73) Patentinhaber: SEW-EURODRIVE GmbH & Co. KG, 76646 Bruchsal (DE)
(72) Erfinder: SCHMIDT, Josef, 76676 Graben-Neudorf (DE); TUSKAN, Andreas, 75045 Walzbachtal (DE)
(86) Internationale Anmeldenummer: PCT/EP2021/025057
(87) Internationale Veröffentlichungsnummer: WO 2021/180360

(56) Entgegenhaltungen:
- WO-A1-2019/020862
- DE-A1-102017 201 108
- US-A1- 2017 080 846

## Beschreibung

Die Erfindung betrifft ein mobiles Transportsystem zum Transport von Gegenständen, insbesondere in einer technischen Anlage, welches einen Fahrzeugrahmen, ein Paar erste Stützräder und ein Paar zweite Stützräder, welche drehbar gelagert sind, ein um eine erste Antriebsachse drehbares erstes Antriebsrad, ein um eine zweite Antriebsachse drehbares zweites Antriebsrad und einen Pendelrahmen, welcher um eine Pendelachse relativ zu dem Fahrzeugrahmen schwenkbar ist, umfasst.

In technischen Anlagen, beispielsweise in Produktionswerken, werden mobile Transportsysteme, insbesondere autonom fahrende mobile Transportsysteme, zum Transport von Gegenständen, beispielsweise Kleinteilen oder Kisten eingesetzt. Die besagten mobilen Transportsysteme bringen unter anderem Bauteile von Logistikbereichen, wie beispielsweise einem Materiallager, zu Arbeitsplätzen, wo die Bauteile verarbeitet werden. Gattungsgemäße mobile Transportsysteme sind in der Lage, leichte Steigungen oder Gefälle sowie kleine Bodenschwellen oder ähnliche Hindernisse zu überwinden.

Aus dem Dokument DE 10 2017 201 108 A1 ist ein mobiles Transportsystem bekannt, welches als Flurförderfahrzeug ausgebildet ist und ein erstes Stützrad an einem vorderen Ende, ein zweites Stützrad an einem hinteren Ende sowie ein dazwischen angeordnetes Antriebsrad aufweist. Dabei ist das erste Stützrad an einem Fahrgestell angeordnet, während das zweite Stützrad und das Antriebsrad an einem Pendelrahmen angeordnet sind. Der Pendelrahmen ist dabei mittels einer horizontalen Pendelachse an dem Fahrgestell angelenkt.

Das Dokument DE 10 2012 025 152 A1 offenbart ein fahrerloses Transportsystem, welches an einem Tragteil angeordnete Lenkrollen und eine Antriebseinheit aufweist. Die Antriebseinheit weist ein von einem Elektromotor angetriebenes Rad auf und ist über einen Linearaktor relativ zu dem Tragteil bewegbar.

Aus dem Dokument DE 10 2013 019 726 A1 ist ein Fahrzeug bekannt, welches ein Gestell aufweist, an welchem mehrere Lenkeinheiten drehbar gelagert sind. Die Lenkeinheiten weisen jeweils ein Antriebsrad auf, dessen Radachse in einem Radachsträger drehbar gelagert ist, wobei der Radachsträger mittels einer Pendelachse drehbar gelagert ist.

Das Dokument DE 10 2014 015 317 A1 offenbart ein Fahrzeug mit einem Gestell, an dem ein Aufnahmeteil mittels einer Linearführung geführt ist. Das Fahrzeug umfasst ferner eine Antriebseinheit, die Antriebsräder aufweist, welche mittels eines Drehlagers an einer Schwinge drehbar gelagert ist.

Aus dem Dokument WO 2018/136987 A1 ist ein Fahrwerk für Transportvorrichtungen bekannt, welche einen um eine senkrechte Drehachse schwenkbaren Radträger aufweist. An dem Radträger sind zwei um eine gemeinsame Drehachse drehbare Räder angeordnet.

Das Dokument WO 2019/020862 A1 beschreibt ein Fahrzeug, welches ein Paar Antriebsräder und zwei Paar Stützräder umfasst.

Aus dem Dokument US 2017/0080846 A1 ist eine mobile Plattform für Materialtransporte bekannt. Die Plattform umfasst ein Paar Schwingen, die zwischen zwei Positionen schwenkbar sind. An den Schwingen sind mehrere Räder angeordnet.

Das Dokument JP 2005306178 A beschreibt ein fahrerloses Transportfahrzeug. Das Transportfahrzeug umfasst ein Paar Antriebsräder und zwei Paar Stützräder. Das Dokument DE 10 2013 013 438 A1 beschreibt ein Transportfahrzeug zum Befördern von Lastregalen. Das Transportfahrzeug umfasst ein Paar Antriebsräder und zwei Paar Stützräder. Das Dokument DE 27 07 541 A1 beschreibt ein schienengebundenes Fahrzeug. Das Fahrzeug umfasst drei Räderpaare. Das Dokument EP 2 826 693 A2 beschreibt einen Transportwagen mit einem Fahrwerk. Das Fahrwerk umfasst drei Räderpaare.

Der Erfindung liegt die Aufgabe zugrunde, ein mobiles Transportsystem zum Transport von Gegenständen weiterzubilden.

Die Aufgabe wird durch ein mobiles Transportsystem mit den im Anspruch 1 angegebenen Merkmalen gelöst. Vorteilhafte Ausgestaltungen und Weiterbildungen sind Gegenstand der Unteransprüche.

Ein erfindungsgemäßes mobiles Transportsystem zum Transport von Gegenständen, insbesondere in einer technischen Anlage, umfasst einen Fahrzeugrahmen, ein Paar erste Stützräder und ein Paar zweite Stützräder, welche drehbar gelagert sind, ein um eine in eine Querrichtung verlaufende erste Antriebsachse drehbares erstes Antriebsrad, ein um eine in die Querrichtung verlaufende zweite Antriebsachse drehbares zweites Antriebsrad und einen Pendelrahmen, welcher um eine Pendelachse relativ zu dem Fahrzeugrahmen schwenkbar ist. Dabei sind die ersten Stützräder an dem Fahrzeugrahmen angeordnet, und die zweiten Stützräder sind an dem Pendelrahmen angeordnet.

An dem Pendelrahmen ist eine Antriebseinheit angeordnet, welche einen Antriebsrahmen aufweist, wobei das erste Antriebsrad an einer um eine erste Schwingachse relativ zu dem Antriebsrahmen schwenkbaren ersten Schwinge drehbar gelagert ist, und das zweite Antriebsrad an einer um eine zweite Schwingachse relativ zu dem Antriebsrahmen schwenkbaren zweiten Schwinge drehbar gelagert ist. Die erste Schwinge und die zweite Schwinge sind über eine Koppeleinheit derart miteinander gekoppelt, dass eine Schwenkbewegung der ersten Schwinge relativ zu dem Antriebsrahmen um die erste Schwingachse in eine erste Schwenkrichtung eine Schwenkbewegung der zweiten Schwinge relativ zu dem Antriebsrahmen um die zweite Schwingachse in eine der ersten Schwenkrichtung entgegen gerichtete zweite Schwenkrichtung bewirkt.

Durch die erfindungsgemäße Ausgestaltung des mobilen Transportsystems sind Bodenunebenheiten ausgleichbar. Durch die Schwenkbewegung der Schwingen um die Schwingachsen beim Überfahren von Bodenunebenheiten ist sichergestellt, dass beide Antriebsräder stets Kontakt zu dem Boden und einen ausreichend hohen Anpressdruck haben. Ein Einsatz von Federn, um einen ausreichend hohen Anpressdruck der Antriebsräder auf den Boden zu erreichen, ist nicht erforderlich. Das mobile Transportsystem weist dabei eine starre Kinematik auf, welche ein Nachgeben oder Einfedern beim Überfahren von Bodenunebenheiten vorteilhaft verhindert. Vorteilhaft verbleibt zwischen den Antriebsrädern dabei auch ein Bauraum für weitere Komponenten.

Gemäß einer bevorzugten Ausgestaltung der Erfindung sind die erste Antriebsachse und die zweite Antriebsachse rechtwinklig zu der Querrichtung relativ zueinander verschiebbar. Die erste Antriebsachse und die zweite Antriebsachse verlaufen beide in die Querrichtung und damit stets parallel zueinander. Eine solche Verschiebung der Antriebsachsen relativ zueinander geschieht bei einer Schwenkbewegung der Schwingen um die Schwingachsen.

Dadurch wird ein Verkanten der Antriebsräder bei einer Schwenkbewegung der Schwingen um die Schwingachsen vorteilhaft vermieden. Bei einer bestimmten Ausrichtung der Schwingen fluchten die Antriebsachsen miteinander.

Gemäß einer bevorzugten Ausgestaltung der Erfindung verläuft die erste Schwingachse in die Querrichtung, und die zweite Schwingachse verläuft in die Querrichtung. Vorzugsweise fluchten die erste Schwingachse und die zweite Schwingachse dabei miteinander. Die Schwingachsen verlaufen somit parallel zueinander und parallel zu den Antriebsachsen. Eine Schwenkbewegung der Schwingen um die Schwingachsen bewirkt somit eine Verschiebung von einer der Antriebsachsen auf den Boden zu und eine Bewegung der anderen Antriebsachse von dem Boden weg.

Gemäß einer vorteilhaften Ausgestaltung der Erfindung weist die Koppeleinheit eine um eine Koppelachse relativ zu dem Antriebsrahmen schwenkbare Wippe, eine erste Strebe und eine zweite Strebe auf, wobei die erste Schwinge mittels der ersten Strebe mit der Wippe verbunden ist, und die zweite Schwinge mittels der zweiten Strebe mit der Wippe verbunden ist. Eine derartig ausgestaltete Koppeleinheit ist verhältnismäßig kostengünstig herstellbar und benötigt nur einen verhältnismäßig geringen Bauraum.

Bevorzugt verläuft die Koppelachse dabei in eine Längsrichtung, welche sich rechtwinklig zu der Querrichtung erstreckt.

Gemäß einer vorteilhaften Weiterbildung der Erfindung weist die Antriebseinheit einen ersten Antriebsmotor zum Antrieb des ersten Antriebsrads und einen zweiten Antriebsmotor zum Antrieb des zweiten Antriebsrads auf, wobei der erste Antriebsmotor an der ersten Schwinge angeordnet ist, und der zweite Antriebsmotor an der zweiten Schwinge angeordnet ist. Vorzugsweise sind ferner Getriebe vorgesehen, über welche die Antriebsmotoren die Antriebsräder antreiben. Die Getriebe sind dabei ebenfalls an den Schwingen angeordnet. Die Antriebsmotoren sowie die Getriebe sind dadurch platzsparend in einem Bauraum zwischen den Antriebsrädern angeordnet.

Gemäß einer bevorzugten Weiterbildung der Erfindung ist der Antriebsrahmen um eine Lenkachse relativ zu dem Pendelrahmen schwenkbar. Durch eine Schwenkbewegung des Antriebsrahmens ändert sich die Ausrichtung der Antriebsräder relativ zu dem Pendelrahmen und relativ zu dem Fahrzeugrahmen. Dadurch ist eine Änderung der Ausrichtung des Pendelrahmens sowie des Fahrzeugrahmens relativ zu einer Bewegungsrichtung des mobilen Transportsystems durchführbar.

Bevorzugt verläuft die Lenkachse dabei in eine Vertikalrichtung, welche sich rechtwinklig zu der Querrichtung erstreckt. Die Vertikalrichtung verläuft auch rechtwinklig zu der Längsrichtung.

Gemäß einer vorteilhaften Ausgestaltung der Erfindung weist die Antriebseinheit einen Drehkranz auf, welcher an dem Pendelrahmen befestigt ist, wobei der Antriebsrahmen um die Lenkachse relativ zu dem Drehkranz schwenkbar ist, und die Antriebseinheit weist einen Stellmotor zum Antrieb des Antriebsrahmens relativ zu dem Drehkranz auf. Vorzugsweise ist ferner ein Getriebe vorgesehen, über welches der Stellmotor den Antriebsrahmen antreibt. Eine Änderung der Ausrichtung des Pendelrahmens sowie des Fahrzeugrahmens relativ zu einer Bewegungsrichtung des mobilen Transportsystems ist somit mittels des Stellmotors durchführbar.

Gemäß einer vorteilhaften Ausgestaltung der Erfindung umfasst die Antriebseinheit einen Drehübertrager, mittels welchem elektrische Energie und Daten von dem Antriebsrahmen zu dem Pendelrahmen, sowie von dem Pendelrahmen zu dem Antriebsrahmen übertragbar sind. Der Drehübertrager weist dazu beispielsweise mindestens einen Schleifring auf.

Vorzugsweise ist ein Abstand der zweiten Stützräder in einer Grundrichtung zu der Pendelachse zumindest annähernd gleich einem Abstand der Lenkachse in der Grundrichtung zu der Pendelachse. Die Grundrichtung ist eine horizontale Richtung und erstreckt sich rechtwinklig zu der Vertikalrichtung. Die Pendelachse verläuft in eine Seitenrichtung, welche sich rechtwinklig zu der Vertikalrichtung und sich rechtwinklig zu der Grundrichtung erstreckt. Die Pendelachse ist also in Grundrichtung zumindest annähernd mittig zwischen der Pendelachse und den zweiten Stützrädern angeordnet. Dadurch haben die Antriebsräder annähernd den gleichen Anpressdruck auf den Boden wie die zweiten Stützräder. Durch eine Verschiebung der Pendelachse in Grundrichtung ist die Lastverteilung zwischen den Antriebsrädern und den zweiten Stützrädern einstellbar.

Vorteilhaft sind die ersten Stützräder jeweils um eine in eine horizontale Richtung verlaufende erste Drehachse relativ zu dem Fahrzeugrahmen drehbar gelagert und um eine in eine Vertikalrichtung verlaufende erste Schwenkachse relativ zu dem Fahrzeugrahmen schwenkbar. Vorteilhaft sind ebenso die zweiten Stützräder jeweils um eine in eine horizontale Richtung verlaufende zweite Drehachse relativ zu dem Pendelrahmen drehbar gelagert und um eine in eine Vertikalrichtung verlaufende zweite Schwenkachse relativ zu dem Pendelrahmen schwenkbar. Die Vertikalrichtung erstreckt sich dabei rechtwinklig zu der Querrichtung. Horizontale Richtungen erstrecken sich rechtwinklig zu der Vertikalrichtung. Derartig ausgebildete Stützräder sind verhältnismäßig kostengünstig und erleichtern zudem Kurvenfahrten des mobilen Transportsystems.

Gemäß einer vorteilhaften Ausgestaltung der Erfindung ist an den zweiten Stützrädern jeweils eine Bremseinrichtung angeordnet, mittels welcher eine Drehung des jeweiligen zweiten Stützrades um eine in horizontale Richtung verlaufende zweite Drehachse bremsbar ist. Die Bremseinrichtungen sind beispielsweise elektromagnetisch betätigbar. Die zweiten Stützräder mit den Bremseinrichtungen haben auch ständig Kontakt zu dem Boden. Damit ist eine Bremsung des mobilen Transportsystems annähernd unabhängig von der Beschaffenheit des Bodens jederzeit möglich. Zusätzliche Bremseinrichtungen an den ersten Stützrädern und/oder an den Antriebsrädern sind nicht erforderlich.

Gemäß einer vorteilhaften Ausgestaltung der Erfindung sind die Antriebsräder in einer Grundrichtung zwischen den ersten Stützrädern und den zweiten Stützrädern angeordnet. Die Grundrichtung ist, wie bereits erwähnt, eine horizontale Richtung und erstreckt sich rechtwinklig zu der Vertikalrichtung.

Gemäß einer bevorzugten Weiterbildung der Erfindung ist an dem Antriebsrahmen eine Empfangseinheit angeordnet, zu welcher Energie induktiv von einer Ladeeinheit übertragbar ist. Die Ladeeinheit ist beispielsweise als linienförmiger Leiter oder als Spule ausgebildet und befindet sich stationär in dem Boden. Die von der Ladeeinheit zu der Empfangseinheit induktiv übertragene Energie dient beispielsweise zum Laden eines elektrischen Energiespeichers des mobilen Transportsystems.

Gemäß einer vorteilhaften Weiterbildung der Erfindung ist an dem Antriebsrahmen mindestens ein induktiver Sensor zur Detektion eines Magnetfeldes eines insbesondere linienförmigen Leiters angeordnet. Wenn das Magnetfeld beispielsweise von einem in dem Boden verlegten linienförmigen Leiter erzeugt wird, so gestattet der induktive Sensor, dem besagten linienförmigen Leiter zu folgen um zu einem bestimmten Ziel zu gelangen.

Die Erfindung ist nicht auf die Merkmalskombination der Ansprüche beschränkt. Für den Fachmann ergeben sich weitere sinnvolle Ausführungsformen der Erfindung innerhalb des Schutzumfang der beigefügten Ansprüche.

Die Erfindung wird nun anhand von Abbildungen näher erläutert. Die Erfindung ist nicht auf die in den Abbildungen dargestellten Ausführungsbeispiele beschränkt. Die Abbildungen stellen den Gegenstand der Erfindung nur schematisch dar. Es zeigen:
- Figur 1:: eine schematische Seitenansicht eines mobilen Transportsystems,
- Figur 2:: eine Seitenansicht einer Antriebseinheit,
- Figur 3:: eine Frontansicht einer Antriebseinheit,
- Figur 4:: eine perspektivische Ansicht einer Antriebseinheit und
- Figur 5:: eine perspektivische Ansicht einer Antriebseinheit gemäß einer Abwandlung.

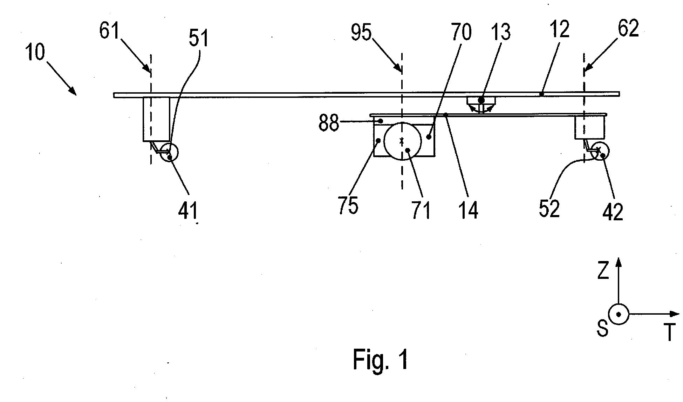

Figur 1 zeigt eine schematische Seitenansicht eines mobilen Transportsystems 10. Das mobile Transportsystem 10 dient vorliegend zum Transport von Gegenständen in einer technischen Anlage. Bei der technischen Anlage handelt es sich um eine industrielle Anwendung, beispielsweise ein Produktionswerk. Das Transportsystem 10 dient beispielsweise auch zur Lieferung von Waren zu einem Wohnhaus eines privaten Empfängers in einer Stadt oder in einem Wohngebiet. Bei dem mobilen Transportsystem 10 handelt es sich vorliegend um ein autonom fahrendes Fahrzeug. In der hier gezeigten Darstellung befindet sich das mobile Transportsystem 10 auf einem ebenen Boden innerhalb einer technischen Anlage.

Das mobile Transportsystem 10 umfasst einen Fahrzeugrahmen 12 und einen Pendelrahmen 14. Der Pendelrahmen 14 ist um eine Pendelachse 13 relativ zu dem Fahrzeugrahmen 12 schwenkbar. Die Pendelachse 13 verläuft in Seitenrichtung S. Der Fahrzeugrahmen 12 weist einen annähernd rechteckförmigen Querschnitt auf und erstreckt sich vorwiegend in eine Grundrichtung T und in die Querrichtung S.

Die Grundrichtung T entspricht zumindest annähernd der gewöhnlichen Fahrtrichtung des mobilen Transportsystems 10. Die Seitenrichtung S verläuft rechtwinklig zu der Grundrichtung T. Die Grundrichtung T und die Seitenrichtung S stellen horizontale Richtungen dar und verlaufen parallel zu dem ebenen Boden, auf welchem sich das mobile Transportsystem 10 befindet. Eine Vertikalrichtung Z steht senkrecht auf dem ebenen Boden und verläuft somit rechtwinklig zu der Grundrichtung T und rechtwinklig zu der Seitenrichtung S. Jede Richtung rechtwinklig zu der Vertikalrichtung Z stellt eine horizontale Richtung dar.

An dem Fahrzeugrahmen 12 sind zwei erste Stützräder 41 angeordnet, welche relativ zu dem Fahrzeugrahmen 12 drehbar sind. Die ersten Stützräder 41 sind in Seitenrichtung S versetzt zueinander angeordnet. An dem Pendelrahmen 14 sind zwei zweite Stützräder 42 angeordnet, welche relativ zu dem Pendelrahmen 14 drehbar sind. Die zweiten Stützräder 42 sind in Seitenrichtung S versetzt zueinander angeordnet.

Die ersten Stützräder 41 sind jeweils um eine in Vertikalrichtung Z verlaufende erste Schwenkachse 61 relativ zu dem Fahrzeugrahmen 12 schwenkbar. Die ersten Stützräder 41 sind ferner jeweils um eine in eine horizontale Richtung verlaufende erste Drehachse 51 relativ zu dem Fahrzeugrahmen 12 drehbar gelagert. In der hier gezeigten Darstellung verlaufen die ersten Drehachsen 51 in Seitenrichtung S. In Abhängigkeit von einer Schwenkung der ersten Stützräder 41 um die erste Schwenkachse 61 verlaufen die ersten Drehachsen 51 beispielsweise in Grundrichtung T oder in eine andere horizontale Richtung. Die erste Schwenkachse 61 und die erste Drehachse 51 eines ersten Stützrades 41 schneiden sich vorliegend nicht.

Die zweiten Stützräder 42 sind jeweils um eine in Vertikalrichtung Z verlaufende zweite Schwenkachse 62 relativ zu dem Pendelrahmen 14 schwenkbar. Die zweiten Stützräder 42 sind ferner jeweils um eine in eine horizontale Richtung verlaufende zweite Drehachse 52 relativ zu dem Pendelrahmen 14 drehbar gelagert. In der hier gezeigten Darstellung verlaufen die zweiten Drehachsen 52 in Seitenrichtung S. In Abhängigkeit von einer Schwenkung der zweiten Stützräder 42 um die zweiten Schwenkachse 62 verlaufen die zweiten Drehachsen 52 beispielsweise in Grundrichtung T oder in eine andere horizontale Richtung. Die zweite Schwenkachse 62 und die zweite Drehachse 52 eines zweiten Stützrades 42 schneiden sich vorliegend nicht.

Das mobile Transportsystem 10 umfasst eine Antriebseinheit 70, die an dem Pendelrahmen 14 angeordnet ist. Die Antriebseinheit 70 weist einen Antriebsrahmen 75 und einen Drehkranz 88 auf. Der Antriebsrahmen 75 ist um eine Lenkachse 95 relativ zu dem Drehkranz 88 schwenkbar. Der Drehkranz 88 ist an dem Pendelrahmen 14 befestigt. Der Antriebsrahmen 75 ist somit um die Lenkachse 95 relativ zu dem Pendelrahmen 14 schwenkbar. Die Antriebseinheit 70 ist in der Grundrichtung T zwischen den ersten Stützrädern 41 und den zweiten Stützrädern 42 angeordnet.

Die Antriebseinheit 70 umfasst ein erstes Antriebsrad 71 und ein zweites Antriebsrad 72, welche drehbar gelagert sind. In der hier gezeigten Darstellung ist das zweite Antriebsrad 72 verdeckt. Die Antriebsräder 71, 72 sind in der Grundrichtung T zwischen den ersten Stützrädern 41 und den zweiten Stützrädern 42 angeordnet. Ein Abstand der zweiten Stützräder 42 in der Grundrichtung T zu der Pendelachse 13 ist zumindest annähernd gleich einem Abstand der Lenkachse 95 in der Grundrichtung T zu der Pendelachse 13. Der Abstand der zweiten Stützräder 42 zu der Pendelachse 13 in Grundrichtung T entspricht dabei dem Abstand der zweiten Schwenkachsen 62 zu der Pendelachse 13 in Grundrichtung T.

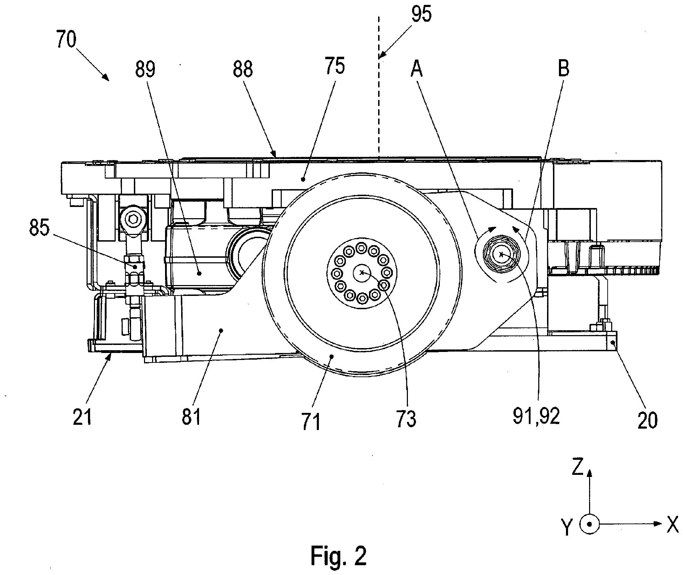

Figur 2 zeigt eine Seitenansicht der Antriebseinheit 70. Die Antriebseinheit 70 umfasst eine erste Schwinge 81, die um eine erste Schwingachse 91 relativ zu dem Antriebsrahmen 75 schwenkbar ist, und eine hier verdeckte zweite Schwinge 82, die um eine zweite Schwingachse 92 relativ zu dem Antriebsrahmen 75 schwenkbar ist. Die erste Schwingachse 91 und die zweite Schwingachse 92 verlaufen in eine Querrichtung Y und fluchten miteinander. Die Schwingen 81, 82 sind jeweils in eine erste Schwenkrichtung A sowie in eine der ersten Schwenkrichtung A entgegen gerichtete zweite Schwenkrichtung B um die Schwingachsen 91, 92 relativ zu dem Antriebsrahmen 75 schwenkbar.

Die Querrichtung Y verläuft rechtwinklig zu der Vertikalrichtung Z. Eine Längsrichtung X verläuft rechtwinklig zu der Vertikalrichtung Z und rechtwinklig zu der Querrichtung Y. Die Längsrichtung X und die Querrichtung Y stellen horizontale Richtungen dar. Jede Richtung rechtwinklig zu der Vertikalrichtung Z stellt eine horizontale Richtung dar. Der Antriebsrahmen 75 der Antriebseinheit 70 ist, wie bereits erwähnt, um die Lenkachse 95 relativ zu dem Drehkranz 88 und zu dem Pendelrahmen 14 des mobilen Transportsystems 10 schwenkbar. In Abhängigkeit von einer Schwenkbewegung des Antriebsrahmens 75 um die Lenkachse 95 ändert sich eine Ausrichtung des Antriebsrahmens 75 relativ zu dem Fahrzeugrahmen 12 und relativ zu dem Pendelrahmen 14. In der in Figur 1 gezeigten Darstellung entspricht die Längsrichtung X der Grundrichtung T, und die Querrichtung Y entspricht der Seitenrichtung S.

Das erste Antriebsrad 71 ist an der ersten Schwinge 81 um eine in die Querrichtung Y verlaufende erste Antriebsachse 73 drehbar gelagert. Das zweite Antriebsrad 72 ist an der zweiten Schwinge 82 um eine in die Querrichtung Y verlaufende zweite Antriebsachse 74 drehbar gelagert. In der hier gezeigten Darstellung ist das zweite Antriebsrad 72 verdeckt. Die Antriebsachsen 73, 74 verlaufen also parallel zu den Schwingachsen 91, 92, sind jedoch parallel zu diesen versetzt. Durch Schwenkbewegungen der Schwingen 81, 82 um die Schwingachsen 91, 92 sind die Antriebsachsen 73, 74 rechtwinklig zu der Querrichtung Y relativ zueinander verschiebbar.

Die Antriebseinheit 70 weist eine Empfangseinheit 20 auf, welche an dem Antriebsrahmen 75 angeordnet ist, und zu welcher Energie induktiv von einer Ladeeinheit übertragbar ist. Die Ladeeinheit ist beispielsweise als linienförmiger Leiter oder als Spule ausgebildet. Die von der Ladeeinheit zu der Empfangseinheit 20 induktiv übertragene Energie dient beispielsweise zum Laden eines elektrischen Energiespeichers des mobilen Transportsystems 10.

Die Antriebseinheit 70 weist ferner einen induktiven Sensor 21 auf, welche an dem Antriebsrahmen 75 angeordnet ist. Der induktive Sensoren 21 dient zur Detektion eines Magnetfeldes. Wenn das Magnetfeld beispielsweise von einem in dem Boden verlegten linienförmigen Leiter erzeugt wird, so gestattet der induktive Sensor 21, dem besagten linienförmigen Leiter zu folgen um zu einem bestimmten Ziel zu gelangen.

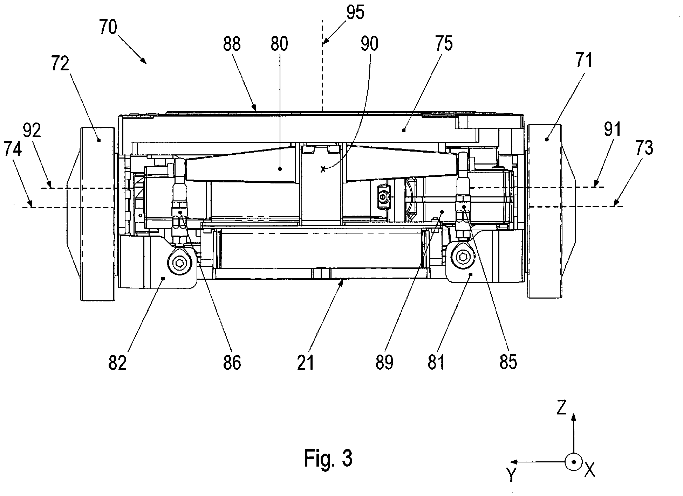

Figur 3 zeigt eine Frontansicht einer Antriebseinheit 70. Die Antriebseinheit 70 umfasst eine Koppeleinheit, die eine um eine Koppelachse 90 relativ zu dem Antriebsrahmen 75 schwenkbare Wippe 80, eine erste Strebe 85 und eine zweite Strebe 86 aufweist. Die erste Schwinge 81 ist mittels der ersten Strebe 85 mit der Wippe 80 verbunden. Die zweite Schwinge 82 ist mittels der zweiten Strebe 86 mit der Wippe 80 verbunden. Die Koppelachse 90 verläuft in die Längsrichtung X. Die erste Schwinge 81 und die zweite Schwinge 82 sind also über die besagte Koppeleinheit miteinander gekoppelt.

Wenn beispielsweise das erste Antriebsrad 71 auf eine Bodenerhöhung fährt, so wird das erste Antriebsrad 71 dadurch in Vertikalrichtung Z nach oben bewegt. Die erste Schwinge 81 wird dadurch um die erste Schwingachse 91 in die erste Schwenkrichtung A geschwenkt. Die erste Schwinge 81 bewirkt dadurch über die erste Strebe 85 eine Schwenkbewegung der Wippe 80 um die Koppelachse 90. Die Wippe 80 bewirkt dadurch über die zweite Strebe 86 eine Schwenkbewegung der zweiten Schwinge 82 um die zweite Schwingachse 92 in die zweite Schwenkrichtung B. Dadurch wird das zweite Antriebsrad 72 in Vertikalrichtung Z nach unten bewegt.

Bei dem beschriebenen Vorgang bewegen sich die Antriebsräder 71, 72 nicht ausschließlich in Vertikalrichtung Z, sondern auch geringfügig in Längsrichtung X. Aufgrund der geometrischen Anordnung der Schwingen 81, 82 und der Schwingachsen 91, 92 ist die Bewegung der Antriebsräder 71, 72 in Längsrichtung X gegenüber der Bewegung in Vertikalrichtung Z jedoch vernachlässigbar.

Die erste Schwinge 81 und die zweite Schwinge 82 sind somit über die Koppeleinheit derart miteinander gekoppelt, dass eine Schwenkbewegung der ersten Schwinge 81 um die erste Schwingachse 91 in die erste Schwenkrichtung A eine Schwenkbewegung der zweiten Schwinge 82 um die zweite Schwingachse 92 in die zweite Schwenkrichtung B bewirkt. Die erste Schwinge 81 und die zweite Schwinge 82 sind über die Koppeleinheit ebenfalls derart miteinander gekoppelt, dass eine Bewegung des ersten Antriebsrads 71 in Vertikalrichtung Z nach oben eine Bewegung des zweiten Antriebsrads 72 in Vertikalrichtung Z nach unten bewirkt, und umgekehrt.

Die erste Strebe 85 und die zweite Strebe 86 erstrecken sich zumindest annähernd in die Vertikalrichtung Z. Die erste Strebe 85 und die zweite Strebe 86 sind jeweils unabhängig voneinander längeneinstellbar. Das bedeutet, eine Ausdehnung der Streben 85, 86 in die Vertikalrichtung Z ist einstellbar.

Die Antriebseinheit 70 weist einen hier nicht dargestellten Neigungssensor auf, welcher eine Neigung der Wippe 80 um die Koppelachse 90 relativ zu dem Antriebsrahmen 75 erfasst. Die Antriebseinheit 70 weist einen hier nicht dargestellten Neigungssensor auf, welcher eine Neigung der ersten Schwinge 81 um die erste Schwingachse 91 relativ zu dem Antriebsrahmen 75 erfasst. Die Antriebseinheit 70 weist einen hier nicht dargestellten Neigungssensor auf, welcher eine Neigung der zweiten Schwinge 82 um die zweite Schwingachse 92 relativ zu dem Antriebsrahmen 75 erfasst.

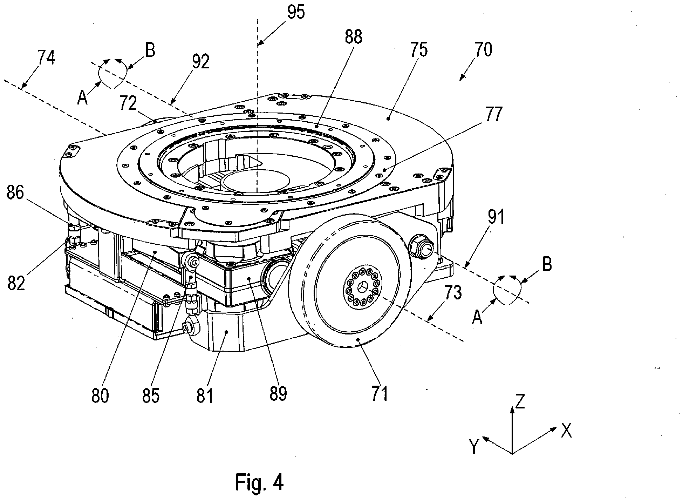

Figur 4 zeigt eine perspektivische Ansicht einer Antriebseinheit 70. Die Antriebseinheit 70 weist einen Stellmotor 89 zum Antrieb des Antriebsrahmens 75 relativ zu dem Drehkranz 88 um die Lenkachse 95 auf. Der Stellmotor 89 ist vorliegend an dem Antriebsrahmen 75 ortsfest angeordnet und mit einem Getriebe wirkverbunden, über welches der Stellmotor 89 den Antriebsrahmen 75 relativ zu dem Drehkranz 88 antreibt.

Das besagte Getriebe umfasst ein Ritzel 97, welches an dem Antriebsrahmen 75 ortsfest angeordnet ist, und einen Zahnkranz 98. Der Zahnkranz 98 ist ortsfest an dem Drehkranz 88 angeordnet. Das Ritzel 97 kämmt mit dem Zahnkranz 98. In der hier gezeigten Darstellung sind das Ritzel 97 und der Zahnkranz 98 von einer Abdeckplatte 77 verdeckt, welche ortsfest an dem Antriebsrahmen 75 angeordnet ist.

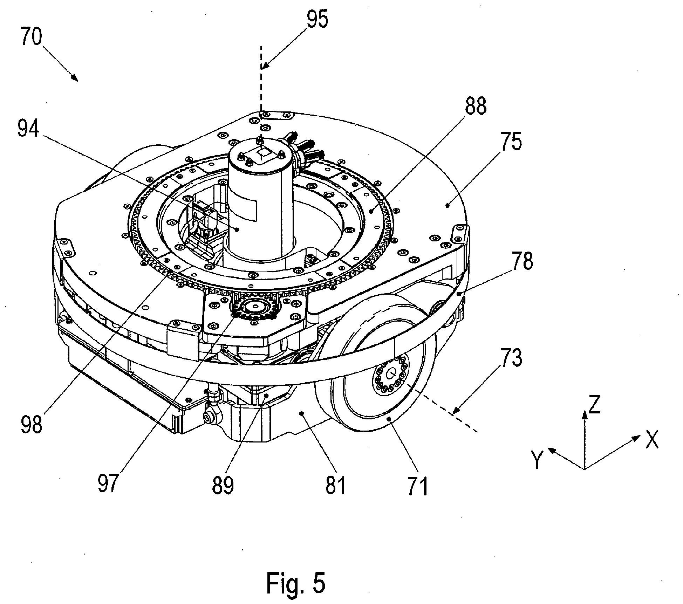

Figur 5 zeigt eine perspektivische Ansicht einer Antriebseinheit 70 gemäß einer Abwandlung. Die in Figur 5 dargestellte Antriebseinheit 70 gemäß der Abwandlung entspricht weitgehend der in Figur 4 dargestellten Antriebseinheit 70. Im Folgenden wird vorrangig auf die Unterschiede zwischen den besagten Antriebseinheiten 70 eingegangen.

In der hier gezeigten Darstellung der Antriebseinheit 70 gemäß der Abwandlung ist die Abdeckplatte 77 entfernt. Das Ritzel 97 des Getriebes und der Zahnkranz 98 des Getriebes sind somit sichtbar. Der Stellmotor 89 treibt das Ritzel 97 an, welches mit dem Zahnkranz 98 kämmt.

Die Antriebseinheit 70 gemäß der Abwandlung umfasst einen Drehübertrager 94, welcher einen annähernd rotationssymmetrischen, insbesondere kreiszylindrischen, Grundkörper aufweist. Eine Zylinderachse des Grundkörpers des Drehübertragers 94 verläuft in Vertikalrichtung Z und fluchtet mit der Lenkachse 95.

Der Drehübertrager 94 ist ortsfest an dem Antriebsrahmen 75 angeordnet und relativ zu dem Drehkranz 88 um die Lenkachse 95 schwenkbar. Es ist auch denkbar, dass der Drehübertrager 94 ortsfest an dem Drehkranz 88 angeordnet und relativ zu dem Antriebsrahmen 75 um die Lenkachse 95 schwenkbar ist.

Der Drehübertrager 94 weist hier nicht dargestellte Schleifringe auf, mittels welchen elektrische Energie und Daten von dem Antriebsrahmen 75 zu dem Drehkranz 88 und zu dem Pendelrahmen 14 übertragbar sind. Mittels der Schleifringe sind elektrische Energie und Daten auch von dem Drehkranz 88 und von dem Pendelrahmen 14 zu dem Antriebsrahmen 75 übertragbar.

Die Antriebseinheit 70 gemäß der Abwandlung umfasst ferner ein Trägerblech 78, welches ortsfest an dem Antriebsrahmen 75 angeordnet ist. Das Trägerblech 78 ist dabei annähernd rotationssymmetrisch zu der Lenkachse 95 ausgestaltet und umgibt den Antriebsrahmen 75 annähernd konzentrisch.

### Bezugszeichenliste

- 10: Mobiles Transportsystem
- 12: Fahrzeugrahmen
- 13: Pendelachse
- 14: Pendelrahmen
- 20: Empfangseinheit
- 21: erster induktiver Sensor
- 41: erstes Stützrad
- 42: zweites Stützrad
- 51: erste Drehachse
- 52: zweite Drehachse
- 61: erste Schwenkachse
- 62: zweite Schwenkachse
- 70: Antriebseinheit
- 71: erstes Antriebsrad
- 72: zweites Antriebsrad
- 73: erste Antriebsachse
- 74: zweite Antriebsachse
- 75: Antriebsrahmen
- 77: Abdeckplatte
- 78: Trägerblech
- 80: Wippe
- 81: erste Schwinge
- 82: zweite Schwinge
- 85: erste Strebe
- 86: zweite Strebe
- 88: Drehkranz
- 89: Stellmotor
- 90: Koppelachse
- 91: erste Schwingachse
- 92: zweite Schwingachse
- 94: Drehübertrager
- 95: Lenkachse
- 97: Ritzel
- 98: Zahnkranz
- A: erste Schwenkrichtung
- B: zweite Schwenkrichtung
- S: Seitenrichtung
- T: Grundrichtung
- X: Längsrichtung
- Y: Querrichtung
- Z: Vertikalrichtung

## Patentansprüche

1. Mobiles Transportsystem (10), zum Transport von Gegenständen, insbesondere in einer technischen Anlage, umfassend
einen Fahrzeugrahmen (12),
ein Paar erste Stützräder (41) und ein Paar zweite Stützräder (42), welche drehbar gelagert sind,
ein um eine in eine Querrichtung (Y) verlaufende erste Antriebsachse (73) drehbares erstes Antriebsrad (71),
ein um eine in die Querrichtung (Y) verlaufende zweite Antriebsachse (74) drehbares zweites Antriebsrad (72) und
einen Pendelrahmen (14), welcher um eine Pendelachse (13) relativ zu dem Fahrzeugrahmen (12) schwenkbar ist, wobei
die ersten Stützräder (41) an dem Fahrzeugrahmen (12) angeordnet sind, und
die zweiten Stützräder (42) an dem Pendelrahmen (14) angeordnet sind, und wobei
an dem Pendelrahmen (14) eine Antriebseinheit (70) angeordnet ist, welche
einen Antriebsrahmen (75) aufweist,
**dadurch gekennzeichnet, dass**
das erste Antriebsrad (71) an einer um eine erste Schwingachse (91) relativ zu dem Antriebsrahmen (75) schwenkbaren ersten Schwinge (81) drehbar gelagert ist, und
das zweite Antriebsrad (72) an einer um eine zweite Schwingachse (92) relativ zu dem Antriebsrahmen (75) schwenkbaren zweiten Schwinge (82) drehbar gelagert ist, und dass
die erste Schwinge (81) und die zweite Schwinge (82) über eine Koppeleinheit derart miteinander gekoppelt sind, dass
eine Schwenkbewegung der ersten Schwinge (81) um die erste Schwingachse (91) in eine erste Schwenkrichtung (A)
eine Schwenkbewegung der zweiten Schwinge (82) um die zweite Schwingachse (92) in eine der ersten Schwenkrichtung (A) entgegen gerichtete zweite Schwenkrichtung (B) bewirkt.

2. Mobiles Transportsystem (10) nach Anspruch 1, wobei die erste Antriebsachse (73) und die zweite Antriebsachse (74) rechtwinklig zu der Querrichtung (Y) relativ zueinander verschiebbar sind.

3. Mobiles Transportsystem (10) nach mindestens einem der vorangegangenen Ansprüche, wobei
die erste Schwingachse (91) in die Querrichtung (Y) verläuft, und dass
die zweite Schwingachse (92) in die Querrichtung (Y) verläuft, und/oder dass
die erste Schwingachse (91) und die zweite Schwingachse (92) miteinander fluchten.

4. Mobiles Transportsystem (10) nach mindestens einem der vorangegangenen Ansprüche, wobei
die Koppeleinheit eine um eine Koppelachse (90) schwenkbare Wippe (80),
eine erste Strebe (85) und eine zweite Strebe (86) aufweist, wobei
die erste Schwinge (81) mittels der ersten Strebe (85) mit der Wippe (80) verbunden ist, und
die zweite Schwinge (82) mittels der zweiten Strebe (86) mit der Wippe (80) verbunden ist.

5. Mobiles Transportsystem (10) nach Anspruch 4, wobei
die Koppelachse (90) in eine Längsrichtung (X) verläuft, welche sich rechtwinklig zu der Querrichtung (Y) erstreckt.

6. Mobiles Transportsystem (10) nach mindestens einem der vorangegangenen Ansprüche, wobei
die Antriebseinheit (70) einen ersten Antriebsmotor zum Antrieb des ersten Antriebsrads (71) und einen zweiten Antriebsmotor zum Antrieb des zweiten Antriebsrads (72) aufweist, wobei der erste Antriebsmotor an der ersten Schwinge (81) angeordnet ist, und
der zweite Antriebsmotor an der zweiten Schwinge (82) angeordnet ist.

7. Mobiles Transportsystem (10) nach mindestens einem der vorangegangenen Ansprüche, wobei der Antriebsrahmen (75) um eine Lenkachse (95) relativ zu dem Pendelrahmen (14) schwenkbar ist.

8. Mobiles Transportsystem (10) nach Anspruch 7, wobei
die Lenkachse (95) in eine Vertikalrichtung (Z) verläuft, welche sich rechtwinklig zu der Querrichtung (Y) erstreckt.

9. Mobiles Transportsystem (10) nach einem der Ansprüche 7 bis 8, wobei
die Antriebseinheit (70) einen Drehkranz (88) aufweist, welcher an dem Pendelrahmen (14) befestigt ist, wobei
der Antriebsrahmen (75) um die Lenkachse (95) relativ zu dem Drehkranz (88) schwenkbar ist, und dass
die Antriebseinheit (70) einen Stellmotor (89) zum Antrieb des Antriebsrahmens (75) relativ zu dem Drehkranz (88) aufweist.

10. Mobiles Transportsystem (10) nach einem der Ansprüche 7 bis 9, wobei die Antriebseinheit (70) einen Drehübertrager (94) umfasst, mittels welchem elektrische Energie und Daten von dem Antriebsrahmen (75) zu dem Pendelrahmen (14), sowie von dem Pendelrahmen (14) zu dem Antriebsrahmen (75) übertragbar sind.

11. Mobiles Transportsystem (10) nach einem der Ansprüche 7 bis 10, wobei
ein Abstand der zweiten Stützräder (42) in einer Grundrichtung (T) zu der Pendelachse (13) zumindest annähernd gleich einem Abstand der Lenkachse (95) in der Grundrichtung (T) zu der Pendelachse (13) ist.

12. Mobiles Transportsystem (10) nach mindestens einem der vorangegangenen Ansprüche, wobei
die ersten Stützräder (41) jeweils um eine in eine horizontale Richtung verlaufende erste Drehachse (51) relativ zu dem Fahrzeugrahmen (12) drehbar gelagert und
um eine in eine Vertikalrichtung (Z) verlaufende erste Schwenkachse (61) relativ zu dem Fahrzeugrahmen (12) schwenkbar sind, und/oder dass
die zweiten Stützräder (42) jeweils um eine in eine horizontale Richtung verlaufende zweite Drehachse (52) relativ zu dem Pendelrahmen (14) drehbar gelagert und
um eine in eine Vertikalrichtung (Z) verlaufende zweite Schwenkachse (62) relativ zu dem Pendelrahmen (12) schwenkbar sind, wobei
die Vertikalrichtung (Z) sich rechtwinklig zu der Querrichtung (Y) erstreckt.

13. Mobiles Transportsystem (10) nach mindestens einem der vorangegangenen Ansprüche, wobei
an den zweiten Stützrädern (42) jeweils eine Bremseinrichtung angeordnet ist, mittels welcher eine Drehung des jeweiligen zweiten Stützrades (42) um eine in horizontale Richtung verlaufende zweite Drehachse (52) bremsbar ist.

14. Mobiles Transportsystem (10) nach mindestens einem der vorangegangenen Ansprüche, wobei
die Antriebsräder (71, 72) in einer Grundrichtung (T) zwischen den ersten Stützrädern (41) und den zweiten Stützrädern (42) angeordnet sind.

15. Mobiles Transportsystem (10) nach mindestens einem der vorangegangenen Ansprüche, wobei
an dem Antriebsrahmen (75) eine Empfangseinheit (20) angeordnet ist, zu welcher Energie induktiv von einer Ladeeinheit übertragbar ist, und/oder dass
an dem Antriebsrahmen (75) mindestens ein induktiver Sensor (21) zur Detektion eines Magnetfeldes eines insbesondere linienförmigen Leiters angeordnet ist.

## Claims

1. A mobile transport system (10), for the transportation of objects, in particular in a technical system, comprising
a vehicle frame (12),
a pair of first support wheels (41) and a pair of second support wheels (42), which are rotatably mounted,
a first drive wheel (71) rotatable about a first drive axis (73) running in a transverse direction (Y),
a second drive wheel (72) rotatable about a second drive axis (74) running in the transverse direction (Y) and
a swing frame (14) pivotable relative to the vehicle frame (12) about a swing axis (13), wherein
the first support wheels (41) are arranged on the vehicle frame (12) and the second support wheels (42) are arranged on the swing frame (14), and wherein
a drive unit (70) is arranged on the swing frame (14) and has a drive frame (75), **characterised in that**
the first drive wheel (71) is rotatably mounted on a first swing arm (81) pivotable relative to the drive frame (75) about a first swing axis (91), and the second drive wheel (72) is rotatably mounted on a second swing arm (82) pivotable relative to the drive frame (75) about a second swing axis (92), and **in that** the first swing arm (81) and the second swing arm (82) are coupled to one another via a coupling unit in such a manner that a pivot motion of the first swing arm (81) about the first swing axis (91) in a first pivot direction (A) effects a pivot motion of the second swing arm (82) about the second swing axis (92) in a second pivot direction (B) directed counter to the first pivot direction (A).

2. A mobile transport system (10) according to claim 1, wherein
the first drive axis (73) and the second drive axis (74) are displaceable relative to one another at right angles to the transverse direction (Y).

3. A mobile transport system (10) according to at least one of the preceding claims,
wherein
the first swing axis (91) runs in the transverse direction (Y), and in that the second swing axis (92) runs in the transverse direction (Y), and/or in that the first swing axis (91) and
the second swing axis (92) are aligned with one another.

4. A mobile transport system (10) according to at least one of the preceding claims,
wherein
the coupling unit has a rocker (80), pivotable about a coupling axis (90), a first strut (85) and a second strut (86), wherein
the first swing arm (81) is connected to the rocker (80) by means of the first strut (85) and the second swing arm (82) is connected to the rocker (80) by means of the second strut (86).

5. A mobile transport system (10) according to claim 4, wherein
the coupling axis (90) runs in a longitudinal direction (X) which extends at right angles to the transverse direction (Y).

6. A mobile transport system (10) according to at least one of the preceding claims,
wherein
the drive unit (70) has a first drive motor to drive the first drive wheel (71) and a second drive motor to drive the second drive wheel (72), wherein the first drive motor is arranged on the first swing arm (81) and the second drive motor is arranged on the second swing arm (82).

7. A mobile transport system (10) according to at least one of the preceding claims,
wherein
the drive frame (75) is pivotable relative to the swing frame (14) about a steering axis (95).

8. A mobile transport syatem (10) according to claim 7, wherein
the steering axis (95) runs in a vertical direction (Z) which extends at right angles to the transverse direction (Y).

9. A mobile transport system (10) according to any one of claims 7 to 8, wherein
the drive unit (70) has a slewing ring (88) which is secured to the swing frame (14), wherein
the drive frame (75) is pivotable relative to the slewing ring (88) about the steering axis (95),
and in that
the drive unit (70) has an actuator (89) to drive the drive frame (75) relative to the slewing ring (88).

10. A mobile transport system (10) according to any one of claims 7 to 9, wherein
the drive unit (70) comprises a rotary transmitter (94) by means of which electrical energy and data can be transmitted from the drive frame (75) to the swing frame (14) as well as from the swing frame (14) to the drive frame (75).

11. A mobile transport system (10) according to any one of claims 7 to 10, wherein
a spacing of the second support wheels (42) from the swing axis (13) in a basic direction (T) is at least approximately equal to a spacing of the steering axis (95) from the swing axis (13) in the basic direction (T).

12. A mobile transport system (10) according to at least one of the preceding claims,
wherein
the first support wheels (41) are each rotatably mounted relative to the vehicle frame (12) about a first rotational axis (51) running in a horizontal direction and are each pivotable relative to the vehicle frame (12) about a first pivot axis (61) running in a vertical direction (Z), and/or in that
the second support wheels (42) are each rotatably mounted relative to the swing frame (14) about a second rotational axis (52) running in a horizontal direction and are each pivotable relative to the swing frame (12) about a second pivot axis (62) running in a vertical direction (Z), wherein
the vertical direction (Z) extends at right angles to the transverse direction (Y).

13. A mobile transport system (10) according to at least one of the preceding claims, wherein,
a braking device is arranged in each case at the second support wheels (42), by means of which a rotation of the respective second support wheel (42) about a second rotational axis (52) running in a horizontal direction can be braked.

14. A mobile transport system (10) according to at least one of the preceding claims,
wherein
the drive wheels (71, 72) are arranged between the first support wheels (41) and the second support wheels (42) in a basic direction (T).

15. A mobile transport system (10) according to at least one of the preceding claims,
wherein
on the drive frame (75) there is arranged a receiving unit (20) and energy can be inductively transmitted thereto from a charging unit, and/or in that on the drive frame (75) there is arranged at least one inductive sensor (21) for the detection of a magnetic field of a conductor which is in particular linear.

## Revendications

1. Système de transport mobile (10), destiné au transport d'objets, en particulier au sein d'une installation technique, comprenant
un châssis de véhicule (12),
une paire de premières roues de support (41) et une paire de deuxièmes roues de support (42), qui sont montées pivotantes,
une première roue motrice (71) pouvant tourner autour d'un premier axe d'entraînement (73) s'étendant dans une direction transversale (Y),
une deuxième roue motrice (72) pouvant tourner autour d'un deuxième axe d'entraînement (74) s'étendant dans la direction transversale (Y) et
un cadre oscillant (14) pouvant pivoter par rapport au châssis de véhicule (12) autour d'un demi-arbre oscillant (13), où
les premières roues de support (41) sont agencées sur le châssis de véhicule (12), et les deuxièmes roues de support (42) sont agencées sur le cadre oscillant (14), et une unité d'entraînement (70) présentant un cadre d'entraînement (75) est agencée sur le cadre oscillant (14),
**caractérisé en ce que**
la première roue d'entraînement (71) est montée rotative sur un premier bras oscillant (81) pouvant pivoter par rapport au cadre d'entraînement (75) autour d'un premier axe d'oscillation (91), et
la deuxième roue d'entraînement (72) est montée rotative sur un deuxième bras oscillant (82) pouvant pivoter par rapport au cadre d'entraînement (75) autour d'un deuxième axe d'oscillation (92), et **en ce que**
le premier bras oscillant (81) et le deuxième bras oscillant (82) sont couplés l'un à l'autre par l'intermédiaire d'une unité de couplage de telle manière que un mouvement de pivotement du premier bras oscillant (81) autour du premier axe d'oscillation (91) dans une première direction de pivotement (A) provoque un mouvement de pivotement du deuxième bras oscillant (82) autour du deuxième axe d'oscillation (92) dans une deuxième direction de pivotement (B) opposée à la première direction de pivotement (A).

2. Système de transport mobile (10) selon la revendication 1, où le premier axe d'entraînement (73) et le deuxième axe d'entraînement (74) peuvent être déplacés l'un par rapport à l'autre perpendiculairement à la direction transversale (Y).

3. Système de transport mobile (10) selon au moins l'une quelconque des revendications précédentes, où
le premier axe d'oscillation (91) s'étend dans la direction transversale (Y), et où
le deuxième axe d'oscillation (92) s'étend dans la direction transversale (Y), et/ou où
le premier axe d'oscillation (91) et le deuxième axe d'oscillation (92) sont alignés l'un avec l'autre.

4. Système de transport mobile (10) selon au moins l'une quelconque des revendications précédentes, où
l'unité de couplage présente une bascule (80) pouvant pivoter autour d'un axe de couplage (90), une première entretoise (85) et une deuxième entretoise (86), où le premier bras oscillant (81) est relié à la bascule (80) au moyen de la première entretoise (85), et
le deuxième bras oscillant (82) est relié à la bascule (80) au moyen de la deuxième entretoise (86).

5. Système de transport mobile (10) selon la revendication 4, où l'axe de couplage (90) s'étend dans une direction longitudinale (X) s'étendant perpendiculairement à la direction transversale (Y).

6. Système de transport mobile (10) selon au moins l'une quelconque des revendications précédentes, où
l'unité d'entraînement (70) présente un premier moteur d'entraînement permettant d'entraîner la première roue d'entraînement (71) et un deuxième moteur d'entraînement permettant d'entraîner la deuxième roue d'entraînement (72), où
le premier moteur d'entraînement est agencé sur le premier bras oscillant (81) et
le deuxième moteur d'entraînement est agencé sur le deuxième bras oscillant (82).

7. Système de transport mobile (10) selon au moins l'une quelconque des revendications précédentes, où
le cadre d'entraînement (75) peut pivoter par rapport au cadre oscillant (14) autour d'un axe de direction (95).

8. Système de transport mobile (10) selon la revendication 7, où l'axe de direction (95) s'étend dans une direction verticale (Z) s'étendant perpendiculairement à la direction transversale (Y).

9. Système de transport mobile (10) selon l'une quelconque des revendications 7 à 8, où
l'unité d'entraînement (70) présente une couronne de rotation (88) qui est fixée au cadre oscillant (14), où
le cadre d'entraînement (75) peut pivoter par rapport à la couronne de rotation (88) autour de l'axe de direction (95), et où
l'unité d'entraînement (70) présente un servomoteur (89) permettant d'entraîner le cadre d'entraînement (75) par rapport à la couronne de rotation (88).

10. Système de transport mobile (10) selon l'une quelconque des revendications 7 à 9, où
l'unité d'entraînement (70) comprend un transducteur rotatif (94) au moyen duquel de l'énergie électrique et des données peuvent être transférées du cadre d'entraînement (75) vers le cadre oscillant (14), ainsi que du cadre oscillant (14) vers le cadre d'entraînement (75).

11. Système de transport mobile (10) selon l'une quelconque des revendications 7 à 10, où
une distance entre les deuxièmes roues de support (42) et le demi-arbre oscillant (13) dans une direction de base (T) est au moins approximativement égale à une distance entre l'axe de direction (95) et le demi-arbre oscillant (13) dans la direction de base (T).

12. Système de transport mobile (10) selon au moins l'une quelconque des revendications précédentes, où
les premières roues de support (41) sont respectivement montées rotatives par rapport au châssis de véhicule (12) autour d'un premier axe de rotation (51) s'étendant dans une direction horizontale et
peuvent pivoter par rapport au châssis de véhicule (12) autour d'un premier axe de pivotement (61) s'étendant dans une direction verticale (Z), et/ou où les deuxièmes roues de support (42) sont respectivement montées rotatives par rapport au cadre oscillant (14) autour d'un deuxième axe de rotation (52) s'étendant dans une direction horizontale et
peuvent pivoter par rapport au cadre oscillant (12) autour d'un deuxième axe de pivotement (62) s'étendant dans une direction verticale (Z), où
la direction verticale (Z) s'étend perpendiculairement à la direction transversale (Y).

13. Système de transport mobile (10) selon au moins l'une quelconque des revendications précédentes, où
respectivement un dispositif de freinage est agencé au niveau des deuxièmes roues de support (42), au moyen duquel une rotation de la deuxième roue de support (42) respective autour d'un deuxième axe de rotation (52) s'étendant dans la direction horizontale peut être freinée.

14. Système de transport mobile (10) selon au moins l'une quelconque des revendications précédentes, où
les roues motrices (71, 72) sont agencées entre les premières roues de support (41) et les deuxièmes roues de support (42) dans une direction de base (T).

15. Système de transport mobile (10) selon au moins l'une quelconque des revendications précédentes, où
une unité de réception (20), vers laquelle de l'énergie peut être transférée par induction par une unité de charge, est agencée sur le cadre d'entraînement (75), et/ou où au moins un capteur inductif (21) permettant de détecter un champ magnétique d'un conducteur en particulier linéaire est agencé sur le cadre d'entraînement (75).
